# FASCICULE DE BREVET EUROPEEN

(11) **EP 1 632 389 B1**
(45) Date de publication et mention de la délivrance du brevet: **07.03.2012**
(21) Numéro de dépôt: 05291768.9
(22) Date de dépôt: 23.08.2005
(51) Int. Cl.: B60N 2/22, B60N 2/64, B60N 2/36, B60N 2/30

(54) **Siège pour véhicule automobile**
Kraftfahrzeugsitz
Automotive vehicle seat

(30) Priorité: 06.09.2004 FR 0409410
(43) Date de publication de la demande: 08.03.2006
(73) Titulaire: Peugeot Citroën Automobiles S.A., 78140 Vélizy Villacoublay (FR)
(72) Inventeur: Gremillet, Eric, 70200 La Vergenne (FR)

(56) Documents cités:
- DE-A1- 1 530 970
- FR-A- 2 610 880
- FR-A- 2 798 331
- FR-A- 2 829 441
- FR-A- 2 849 630
- US-A- 6 113 191
- US-A- 6 152 401
- US-A1- 2003 214 166
- US-B1- 6 447 062

## Description

La présente invention concerne un siège pour véhicule automobile et plus particulièrement un siège arrière (cf. par exemple US 2003/0 214 166, correspondant en préambule de la revendication indépendante).

Les véhicules automobiles par exemple du type monospace ou break sont maintenant équipés, derrière la rangée de sièges avant, de sièges arrière qui sont modulables de façon à adapter l'habitabilité du véhicule en fonction du nombre de passagers et/ou des charges à transporter.

Pour cela, on connaît des sièges démontables qui peuvent être enlevés pour agrandir le volume de chargement. Le principal inconvénient de cette solution réside dans la nécessité du démontage.

En effet, il faut libérer les différents sièges de leur ancrage sur le plancher du véhicule et ranger les sièges démontés, en dehors du véhicule, dans des locaux. Lorsque l'on a besoin d'une place pour un passager supplémentaire, il faut de nouveau rechercher le siège et procéder à son remontage. Ainsi, l'adaptation de l'espace interne du véhicule en fonction de son utilisation nécessite un temps de préparation et des efforts importants. De plus, en milieu urbain, le possesseur d'un tel véhicule ne dispose pas toujours d'un local permettant le stockage des sièges enlevés.

On connaît aussi des sièges qui sont conçus pour pouvoir basculer l'assise derrière la rangée de sièges située devant et rabattre le dossier de façon à augmenter le volume de chargement. Mais, ce type de siège ne permet pas d'obtenir un plancher de chargement continu et plat. '

On connaît également des sièges escamotables qui sont conçus pour pouvoir basculer l'assise dans un logement ménagé au-dessous du plancher du véhicule et rabattre le dossier au-dessus de ladite assise pour fermer le logement et déterminer un plancher de chargement continu et plat.

Mais, ce type de siège n'offre aucune possibilité de réglage en hauteur de la position du dossier en fonction de la morphologie du passager et, dans sa position escamotée, il occupe une place importante.

De plus, le basculement du siège demande un effort important du fait que, le plus souvent, la partie arrière de la garniture de l'assise est encastrée au-dessous de la garniture du dossier si bien que la partie inférieure de ce dossier constitue un point qu'il faut franchir pour rabattre l'assise.

L'invention a pour but de proposer un siège de véhicule automobile et notamment un siège arrière, qui évite les inconvénients précédemment mentionnés.

L'invention a donc pour objet un siège de véhicule automobile et plus particulièrement un siège arrière, du type comprenant une assise et un dossier formés chacun par une armature rigide et un garnissage, l'armature du dossier comportant des moyens de coulissement dudit dossier par rapport à l'assise entre une position haute et une position basse, caractérisé en ce que l'assise et le dossier sont montés déplaçables simultanément par des moyens de basculement sur un plancher du véhicule entre une position d'utilisation et une position escamotée dans laquelle cette assise est placée horizontalement dans un logement ménagé au-dessous du plancher et ce dossier est placé horizontalement au-dessus de ladite assise pour former une partie dudit planche.

Selon d'autres caractéristiques de l'invention:
- les moyens de coulissement sont disposés entre deux montants parallèles et l'armature du dossier et comportent, pour chaque montant, un ensemble formé par une partie fixe portée par le montant correspondant et par une partie mobile portée par l'armature du dossier et destinée à coopérer avec ladite partie fixe,
- chaque ensemble des moyens de coulissement est formé par une glissière à billes ou par un système à crémaillère ou par un système de déplacement pas à pas,
- les moyens de basculement comprennent :
   - à l'avant de l'armature de l'assise, un premier axe de rotation perpendiculaire à la direction longitudinale du véhicule et articulé sur une extrémité d'au moins une biellette dont l'autre extrémité est articulée sur le plancher,
   - à l'arrière de l'armature de l'assise et à la partie supérieure de cette assise, un deuxième axe de rotation perpendiculaire à la direction longitudinale du véhicule et articulé sur les montants, et
   - à la partie inférieure de l'armature du dossier et au-dessous de ladite assise, un troisième axe de rotation perpendiculaire à la direction longitudinale du véhicule et disposé à l'extrémité inférieure des montants, ledit troisième axe de rotation étant déplaçable longitudinalement dans au moins une glissière placée sur le plancher,
- le siège comporte des moyens de verrouillage de l'armature du dossier dans la position d'utilisation de l'assise et du dossier.
- les moyens de verrouillage sont formés par au moins un loquet monté pivotant sur ladite glissière entre une position active de blocage du troisième axe de rotation et une position escamotée de libération de ce troisième axe de rotation,
- le loquet est équipé d'un organe élastique de rappel dudit loquet en position active.

D'autres caractéristiques et avantages de l'invention apparaîtront au cours de la description qui va suivre, donnée à titre d'exemple et faite en référence aux dessins annexés, sur lesquels :
- la Fig. 1 est une vue schématique en perspective d'un siège conforme à l'invention avec le dossier en position haute,
- la Fig. 2 est une vue schématique en perspective du siège conforme à l'invention avec le dossier en position basse,
- la Fig. 3 est une vue schématique des moyens de verrouillage du siège dans sa position d'utilisation, et
- les Figs. 4 et 5 sont des vues schématiques de côté du siège selon l'invention montrant la cinématique de basculement de ce siège.

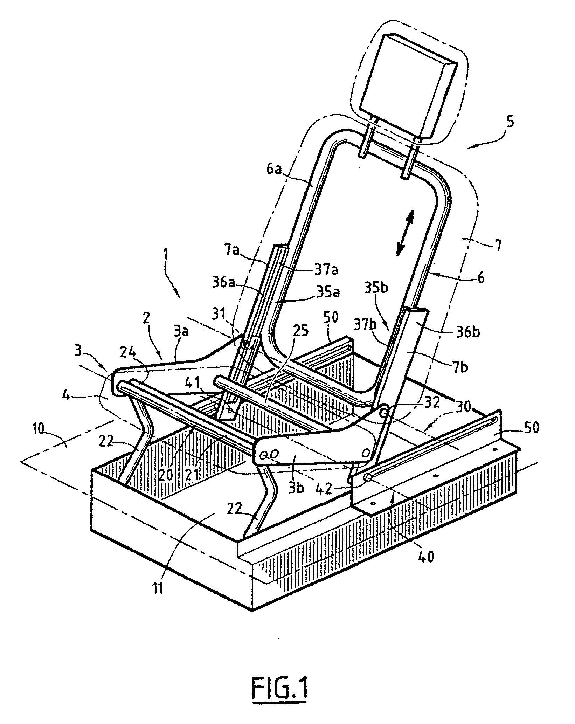

Sur la Fig. 1, on a représenté schématiquement un siège d'un véhicule automobile, notamment un siège arrière, désigné dans son ensemble par la référence 1. De manière classique, ce siège 1 se compose d'une assise 2 et d'un dossier 5.

L'assise 2 se compose d'une armature rigide 3 et d'une garniture 4 enrobant ladite armature rigide 3 et, de même, le dossier 5 se compose d'une armature rigide 6 et d'une garniture 7 enrobant ladite armature rigide 6.

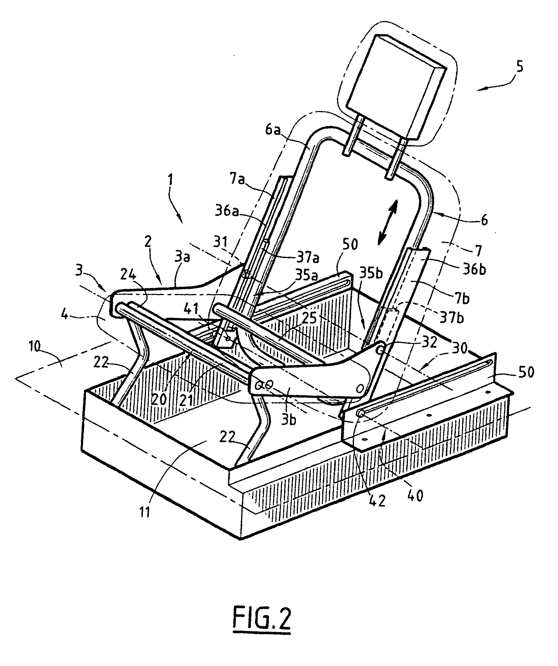

Afin de faciliter la compréhension, uniquement les armatures 3 et 6 respectivement de l'assise 2 et du dossier 5 ont été représentées sur les Figs. 2, 4 et 5.

Ainsi que montré plus particulièrement sur les Figs. 1 et 2, l'armature 3 de l'assise 2 est constituée, entre autres, de deux flasques parallèles, respectivement 3a et 3b, et s'étendant parallèlement à la direction longitudinale du véhicule. L'armature 6 du dossier 5 est constituée d'un cadre 6a disposé entre deux montants parallèles, respectivement 7a et 7b. Ces montants 7a et 7b assurent la liaison, d'une part, entre l'armature 6 du dossier 5 et l'armature 3 de l'assise 2 et, d'autre part, entre cette armature 6 et le plancher 10 du véhicule automobile.

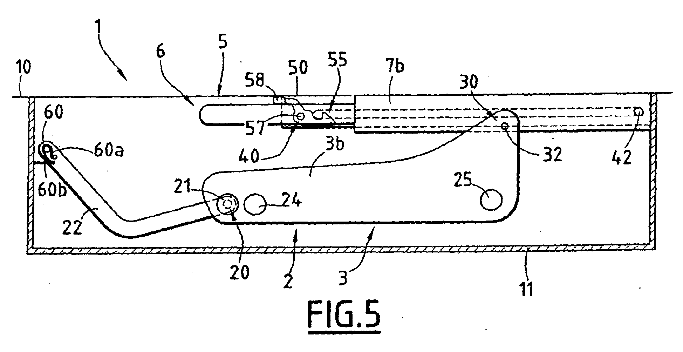

D'une manière générale, l'armature 6 du dossier 5 comporte des moyens de coulissement dudit dossier par rapport à l'assise 2 entre une position haute (Fig. 1) et une position basse (Fig. 2) ainsi que des moyens de basculement simultané de l'assise 2 et du dossier 5 sur le plancher 10 entre une position d'utilisation (Figs. 1 et 2) et une position escamotée (Fig. 5) dans laquelle l'assise 2 est placée horizontalement dans un logement 11 ménagé au-dessous du plancher 10 et le dossier 5 est placé horizontalement au-dessus de ladite assise 2 pour former une partie dudit plancher 10.

Les moyens de coulissement sont disposés entre les deux montants 7a et 7b et le cadre 6a de l'armature 6 du dossier 5. Ces moyens de coulissement comportent un premier ensemble 35a formé par une partie fixe 36a portée par le montant 7a et une partie mobile 37a portée par le cadre 6a et un second ensemble 35b formé par une partie fixe 36b portée par le montant 7b et par une partie mobile 37b portée par ledit cadre 6a de l'armature 6. Ces ensembles 35a et 35b permettent le déplacement dans une direction sensiblement verticale du dossier 5 entre une position haute Fig. 1 et une position basse Fig. 2 et dans une position intermédiaire située entre ces deux positions extrêmes.

A titre d'exemple, les ensembles 35a et 35b sont chacun formé par une glissière à billes ou par un système à crémaillère ou par un système de déplacement pas à pas associé à des moyens de blocage.

Les moyens de basculement simultanés de l'assise 2 et du dossier 5 entre la position d'utilisation et la position escamotée comprennent trois axes de rotation, respectivement 20, 30 et 40, s'étendant parallèlement les uns par rapport aux autres et perpendiculairement à la direction longitudinale du véhicule automobile.

Le premier axe de rotation 20 est constitué par une tige 21 s'étendant entre les deux flasques 3a et 3b et qui est montée articulée sur une extrémité d'une biellette 22 dont l'autre extrémité est montée articulée sur le plancher 10 du véhicule automobile.

De préférence et selon le mode de réalisation représenté sur les figures, l'axe de rotation 20 constitué par la tige 21 est monté articulé entre deux biellettes 22 s'étendant parallèlement l'une par rapport à l'autre et montées chacune à l'extrémité avant d'un des flasques 3a et 3b de l'armature 3 de l'assise 2. L'extrémité de chaque biellette 22 opposée à celle articulée à l'axe de rotation 21 est montée articulée sur le plancher 10 du véhicule automobile.

Le deuxième axe de rotation 30 est disposé à l'arrière de l'armature 3 de l'assise 2 et à la partie supérieure de cette assise 2. Cet axe de rotation 30 s'étend perpendiculairement à la direction longitudinale du véhicule et est constitué, d'une part, par un pion 31 monté articulé entre le flasque 3a de l'armature 3 et le montant 7a de l'armature 7 et, d'autre part, par un pion 32 monté articulé entre le flasque 3b de cette armature 3 de l'assise 2 et le montant 7b de l'armature 6 du dossier 5. Les pions 31 et 32 sont disposés sur le même axe horizontal.

Enfin, le troisième axe de rotation 40 est disposé à la partie inférieure de l'armature 6 du dossier 5 et s'étend perpendiculairement à la direction longitudinale du véhicule automobile. L'axe de rotation 40 est déplaçable longitudinalement dans au moins une glissière 50 disposée sur le plancher 10 du véhicule automobile.

De préférence et comme représenté notamment à la Fig. 1, l'axe de rotation 40 est constitué, d'une part, d'un pion 41 disposé à l'extrémité inférieure du montant 7a et qui est déplaçable longitudinalement dans une glissière 5 et, d'autre part, par un pion 42 disposé à l'extrémité inférieure du montant 7b et qui est également déplaçable dans une glissière 50, lesdites glissières 50 étant parallèles l'une par rapport à l'autre et s'étendant parallèlement à la direction longitudinale du véhicule automobile.

L'armature 3 de l'assise 2 comporte, à sa partie avant, une butée 24 contre les biellettes 22 dans la position d'utilisation de l'assise 2 et du dossier 5 et qui est constituée par une tige s'étendant transversalement entre les flasques 3a et 3b de ladite armature 3 de l'assise 2. L'armature 3 de cette assise 2 comporte aussi, à sa partie arrière, une butée 25 contre les montants 7a et 7b de l'armature 6 du dossier dans la position d'utilisation de l'assise 2 et du dossier 5 dudit siège 1. Cette butée 25 est constituée par une tige s'étendant transversalement entre les flasques 3a et 3b de l'armature 3 de l'assise 2 et qui est disposée au-dessous du deuxième axe de rotation 30.

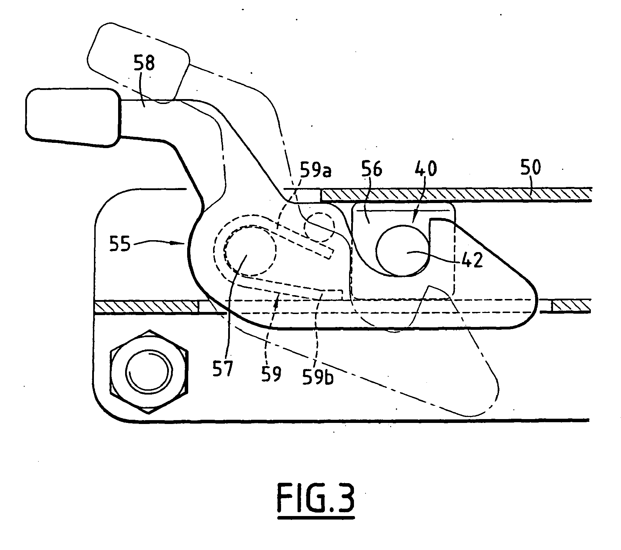

Enfin, le siège 1 comporte des moyens de verrouillage dans la position d'utilisation de ce siège et qui sont représentés notamment à la Fig. 3.

Comme montré sur cette figure, les moyens de verrouillage sont constitués par un loquet 55 monté articulé sur une des glissières 50 et qui comporte une encoche 56 destinée à coopérer avec le pion 41 ou 42 correspondant à la glissière et par exemple avec le pion 42.

Le loquet 45 est monté articulé sur la glissière 50 au moyen d'un axe de pivotement 57 et est équipé d'un levier de commande 58 permettant de déplacer ledit loquet 55 entre une position active de blocage du pion 42 du troisième axe de rotation 40 et une position escamotée de libération de ce pion 42.

Le loquet 55 est également muni d'un organe élastique de rappel du loquet 55 en position active. Cet organe élastique est constitué par exemple par un système à ressort 59 disposé autour de l'axe 57 et qui comporte, de manière classique, une première extrémité 59a solidaire du loquet 55 et une seconde extrémité 59b solidaire de la glissière 50.

De même, l'extrémité d'au moins une biellette 22 articulée sur le plancher 10 est pourvue d'un organe élastique 60 de rappel de cette bielle 22 en position d'utilisation de l'assise 2 et du dossier 5.

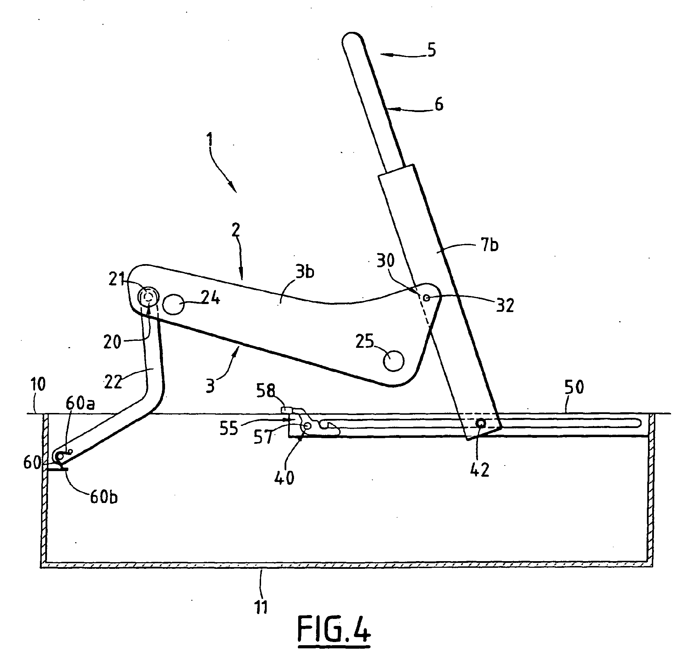

Ainsi que montré à la Fig. 4, cet organe de rappel est constitué par un système à ressort 60 disposé autour de l'axe de l'extrémité correspondante de la biellette 22 et qui comporte une première extrémité 60a fixée sur cette biellette 22 et une seconde extrémité 60b fixée sur le plancher 10.

Pour régler la position du dossier 5 par rapport à l'assise 2 du siège 1, le passager effectue une traction sur le dossier 5 pour le déplacer vers le haut ou une poussée sur ce dossier 5 pour le déplacer vers le bas et obtenir la position qu'il souhaite.

Par ailleurs, le basculement du siège 1 entre la position d'utilisation et la position escamotée est réalisé de la façon suivante.

Tout d'abord futilisateur déplace le dossier 5 vers le bas, comme montré à la Fig. 2, de façon à diminuer l'encombrement vers le haut de ce dossier 5 par rapport à l'assise 2. Puis l'utilisateur bascule vers l'avant du véhicule automobile, le dossier 5 de telle manière que l'assise 2 descende vers le plancher 10 en pivotant autour des axes de rotation 20 et 30 et que les biellettes 22 pivotent autour de leur extrémité articulée sur ledit plancher 10.

Au cours de ce mouvement, le dossier 5 pivote autour des pions 31 et 32 de l'axe de rotation 30 et également autour des pions 41 et 42 de l'axe de rotation 40. Simultanément à ce pivotement, ces pions 41 et 42 coulissent dans les glissières 50 vers l'arrière du véhicule automobile, ainsi que montré à la Fig. 4.

Le siège bascule donc progressivement dans la position escamotée représentée à la Fig. 5, dans laquelle l'assise 2 est placée dans le logement 11 ménagé dans le plancher 10 et le dossier 5 obture ce logement 11 en formant une surface continue avec ledit plancher 10.

Compte tenu de la position basse du dossier 5, ce dernier occupe un minimum de place dans le logement 11.

Pour amener le siège dans sa position d'utilisation, il suffit à l'utilisateur de basculer le dossier 5 vers l'arrière du véhicule automobile de telle manière que les pions 41 et 42 de l'axe de rotation 40 coulissent dans les glissières 50 vers l'avant de ce véhicule et progressivement l'assise 2 revient en position d'utilisation.

Au cours de ce mouvement, le pion 42 bascule le loquet 55 vers le bas et vient se loger dans l'encoche 56 de ce loquet 55 qui est ramené en position de verrouillage par l'organe élastique 59. En position d'utilisation, la butée 24 est en appui sur les biellettes 22 et la butée 25 est en appui sur les montants 7a et 7b du cadre 6a du dossier 5.

Ensuite, l'utilisateur règle la hauteur du dossier 5 par rapport à l'assise 2.

Grâce au coulissement du dossier du siège selon l'invention, ce siège présente un minimum de place dans sa position escamotée, tout en conservant des volumes de garnitures de l'assise et du dossier suffisants pour accueillir des passagers de différentes morphologies. De plus, le système de basculement du siège selon l'invention présente l'avantage de ne demander qu'un effort de manoeuvre très faible et le dossier ne gêne en rien le basculement de cette assise.

Enfin, le siège selon l'invention offre la possibilité de pouvoir disposer d'un plancher de chargement plat et de grande surface, tout en protégeant les garnitures de l'assise et du dossier dans la position escamotée de ce siège. Il permet également en effectuant des manoeuvres simples, de moduler le nombre de places en fonction des passagers, ainsi que le volume de chargement selon les charges à transporter.

## Revendications

1. Siège de véhicule automobile et plus particulièrement siège arrière, du type comprenant une assise (2) et un dossier (5) formés chacun par une armature rigide (3 ; 6) et un garnissage (4 ; 7), l'armature (6) du dossier (5) comportant des moyens (35a, 35b) de coulissement dudit dossier (5) par rapport à l'assise (2) entre une position haute et une position basse, **caractérisé en ce que**, l'assise (2) et le dossier (5) sont montés deptaçables simultanément par des moyens de basculement sur un plancher (10) du véhicule entre une position d'utilisation et une position escamotée dans laquelle cette assise (2) est placée horizontalement dans un logement (11) ménagé au-dessous du plancher (10) et ce dossier (5) est placé horizontalement au-dessus de ladite assise (2) pour former une partie dudit plancher (10).

2. Siège selon la revendication 1, **caractérisé en ce que** les moyens de coulissement sont disposés entre deux montants parallèles (7a, 7b) et l'armature (6) du dossier (5) et comportent, pour chaque montant (7a, 7b), un ensemble (35a, 35b) formé par une partie fixe (36a, 36b) portée par le montant (7a, 7b) correspondant et une partie mobile (37a, 37b) portée par l'armature (6) du dossier (5) et destinée à coopérer avec la partie fixe (36a, 36b).

3. Siège selon la revendication 2, **caractérisé en** te que chaque ensemble (35a, 35b) des moyens de coulissement est formé par une glissière à billes ou par un système à crémaillère ou par un système de déplacement pas à pas.

4. Siège selon l'une quelconque des revendications 1 à 3, **caractérisé en ce que** les moyens de basculement comprennent :
- à l'avant de l'armature (3) de l'assise (2), un premier axe de rotation (20) perpendiculaire à la direction longitudinale du véhicule et articulé sur une extrémité d'au moins une biellette (22) dont l'autre extrémité est articulée sur le plancher (10),
- à l'arrière de l'armature (3) de l'assise (2) et à la partie supérieure de cette assise (2), un deuxième axe de rotation (30) perpendiculaire à la direction longitudinale du véhicule et articulé sur les montants (7a, 7b), et
- à la partie inférieure de l'armature (6) du dossier (5) et au-dessous de ladite assise (2), un troisième axe de rotation (40) perpendiculaire à la direction longitudinale du véhicule et disposé à l'extrémité inférieure des montants (7a, 7b), ledit troisième axe de rotation (40) étant déplaçable longitudinalement dans au moins une glissière (50) placée sur le plancher (10).

5. Siège selon l'une quelconque des revendications 1 à 4, **caractérisé en ce qu'**il comporte des moyens (55, 58) de verrouillage de l'armature (6) du dossier (5) dans la position d'utilisation de l'assise (2) et du dossier (5).

6. Siège selon la revendication 5, **caractérisé en ce que** les moyens de verrouillage sont formés par au moins un loquet (55, 58) monté pivotant sur ladite glissière (50) entre une position active de blocage du troisième axe de rotation (40) et une position escamotée de libération de ce troisième axe de rotation (40).

7. Siège selon la revendication 6, **caractérisé en ce que** le loquet (55, 58) est équipé d'un organe élastique (59) de rappel dudit loquet en position active.

## Claims

1. A seat of a motor vehicle, and more particularly a rear seat, of the type comprising a seating portion (2) and a back (5) each formed by a rigid framework (3; 6) and an upholstery (4; 7), the framework (6) of the back (5) comprising sliding means (35a, 35b) of the said back (5) with respect to the seating portion (2) between an upper position and a lower position, **characterized in that** the seating portion (2) and the back (5) are mounted to so as to be displaceable simultaneously by tilting means on a floor (10) of the vehicle between a position of use and a retracted position, in which this seating portion (2) is placed horizontally in a housing (11) arranged beneath the floor (10) and this back (5) is placed horizontally above the said seating portion (2) to form a portion of the said floor (10).

2. The seat according to Claim 1, **characterized in that** the sliding means are disposed between two parallel posts (7a, 7b) and the framework (6) of the back (5) and comprise, for each post (7a, 7b), an assembly (35a, 35b) formed by a fixed part (36a, 36b) carried by the corresponding post (7a, 7b) and a mobile part (37a, 37b) carried by the framework (6) of the back (5) and intended to cooperate with the fixed part (36a, 36b).

3. The seat according to Claim 2, **characterized in that** each assembly (35a, 35b) of the sliding means is formed by a ball slide or by a rack system or by a step by step displacement system.

4. The seat according to any one of Claims 1 to 3, **characterized in that** the tilting means comprise:
- at the front of the framework (3) of the seating portion (2), a first rotation axis (20) perpendicular to the longitudinal direction of the vehicle and articulated on an end of at least one connecting rod (22), the other end of which is articulated on the floor (10),
- at the rear of the framework (3) of the seating portion (2) and at the upper part of this seating portion (2), a second rotation axis (30) perpendicular to the longitudinal direction of the vehicle and articulated on the posts (7a, 7b), and
- at the lower part of the framework (6) of the back (5) and beneath the said seating portion (2), a third rotation axis (40) perpendicular to the longitudinal direction of the vehicle and disposed at the lower end of the posts (7a, 7b), the said third rotation axis (40) being displaceable longitudinally in at least one slide (50) placed on the floor (10).

5. The seat according to any one of Claims 1 to 4, **characterized in that** it comprises means (55, 58) for locking the framework (6) of the back (5) in the position of use of the seating portion (2) and of the back (5).

6. The seat according to Claim 5, **characterized in that** the locking means are formed by at least one latch (55, 58) pivotably mounted on the said slide (50) between an active locking position of the third rotation axis (40) and a retracted position for freeing this third rotation axis (40).

7. The seat according to Claim 6, **characterized in that** the latch (55, 58) is equipped with an elastic member (59) for returning the said latch into active position.

## Patentansprüche

1. Kraftfahrzeugsitz und insbesondere Rücksitz des Typs, der eine Sitzfläche (2) und eine Rückenlehne (5) aufweist, die jeweils aus einer steifen Bewehrung (3; 6) und einer Polsterung (4; 7) ausgebildet sind, wobei die Bewehrung (6) der Rückenlehne (5) Mittel (35a, 35b) zum Schieben der Rückenlehne (5) in Bezug zu der Sitzfläche (2) zwischen einer Hochstellung und einer Tiefstellung aufweist, **dadurch gekennzeichnet, dass** die Sitzfläche (2) und die Rückenlehne (5) durch Kippmittel auf einem Fußboden (10) des Fahrzeugs zwischen einer Gebrauchsposition und einer eingefahrenen Position, in der diese Sitzfläche (2) horizontal in einer Aufnahme (11) platziert ist, die unterhalb des Fußbodens (10) angeordnet ist, gleichzeitig beweglich sind, und dass diese Rückenlehne (5) horizontal oberhalb der Sitzfläche (2) platziert ist, um einen Teil des Fußbodens (10) zu bilden.

2. Sitz nach Anspruch 1, **dadurch gekennzeichnet, dass** die Schiebemittel zwischen zwei parallelen Ständern (7a, 7b) und der Bewehrung (6) der Rückenlehne (5) angeordnet sind, und für jeden Ständer (7a, 7b) eine Einheit (35a, 35b) aufweisen, die aus einem stationären Teil (36a, 36b) gebildet ist, der von dem entsprechenden Ständer (7a, 7b) getragen wird, und aus einem beweglichen Teil (37a, 37b), der von der Bewehrung (6) der Rückenlehne (5) getragen wird und dazu bestimmt ist, mit dem stationären Teil (36a, 36b) zusammenzuwirken.

3. Sitz nach Anspruch 2, **dadurch gekennzeichnet, dass** jede Einheit (35a, 35b) der Schiebemittel aus einer Gleitführung mit Kugeln oder aus einem Zahnstangensystem oder aus einem System mit schrittweiser Bewegung gebildet ist.

4. Sitz nach einem der Ansprüche 1 bis 3, **dadurch gekennzeichnet, dass** die Kippmittel Folgendes aufweisen:
- an der Vorderseite der Bewehrung (3) der Sitzfläche (2) eine erste Drehachse (20), die zu der Längsrichtung des Fahrzeugs senkrecht ist und auf einem Ende mindestens eines Schwingarms (22) angelenkt ist, dessen anderes Ende auf dem Fußboden (10) angelenkt ist,
- an der Rückseite der Bewehrung (3) der Sitzfläche (2) und an dem oberen Teil dieser Sitzfläche (2) eine zweite Drehachse (30), die zu der Längsrichtung des Fahrzeugs senkrecht ist und auf den Ständern (7a, 7b) angelenkt ist,
- an dem unteren Teil der Bewehrung (6) der Rückenlehne (5) und unterhalb der Sitzfläche (2) eine dritte Drehachse (40), die zu der Längsrichtung des Fahrzeugs senkrecht ist und an dem unteren Ende der Ständer (7a, 7b) angeordnet ist, wobei die dritte Drehachse (40) längs in mindestens einer Gleitführung (50), die auf dem Fußboden (10) platziert ist, bewegt werden kann.

5. Sitz nach einem der Ansprüche 1 bis 4, **dadurch gekennzeichnet, dass** er Mittel (55, 58) zum Verriegeln der Bewehrung (6) der Rückenlehne (5) in der Gebrauchsposition der Sitzfläche (2) und der Rückenlehne (5) aufweist.

6. Sitz nach Anspruch 5, **dadurch gekennzeichnet, dass** die Verriegelungsmittel aus mindestens einer Fallklinke (55, 58) ausgebildet sind, die zwischen einer aktiven Blockierposition der dritten Drehachse (40) und einer eingefahrenen Freigabeposition dieser dritten Drehachse (40) auf der Gleitführung (50) schwenkend montiert ist.

7. Sitz nach Anspruch 6, **dadurch gekennzeichnet, dass** die Fallklinke (55, 58) mit einem elastischen Rückholorgan (59) der Fallklinke in aktive Position ausgestattet ist.
